# EUROPÄISCHE PATENTANMELDUNG

(11) **EP 1 206 920 A1**
(43) Veröffentlichungstag der Anmeldung: **22.05.2002**
(21) Anmeldenummer: 01127002.2
(22) Anmeldetag: 14.11.2001
(51) Int. Cl.: A47K 11/02

(54) **Toilettensystem sowie Nachrüstsatz und Auffangvorrichtung für Toilettensystem**

(30) Priorität: 15.11.2000 DE 20019423 U
(71) Anmelder: Huf, Hans-Joachim, Dr., 55130 Mainz (DE)
(72) Erfinder: Huf, Hans-Joachim, Dr., 55130 Mainz (DE)
(74) Vertreter: Blumbach, Kramer & Partner GbR

(57) **Zusammenfassung**

Der Erfindung liegt folglich die Aufgabe zugrunde, ein Toilettensystem zur Verfügung zu stellen, bei welchem der Einsatz hochgiftiger Chemikalien nicht zwingend notwending ist und das gesamte Gewicht eines funktionsfähigen Toilettensystems nicht unnötig hoch liegt.

Diese Aufgabe wird auf überraschend einfache Weise bereits mit den Merkmalen der Ansprüche 1 und 12 gelöst.

## Beschreibung

Die Erfindung betrifft ein Toilettensystem, welches insbesondere als mobiles oder portables Toilettensystem geeignet ist, sowie einen Nachrüstsatz für herkömmliche Toiletten für eine entsprechende erfindungsgemäße Umrüstung sowie eine Auffangvorrichtung für derartige Toilettensysteme.

Auf vielen Gebieten finden in unserer heutigen immer mobiler werdenden Gesellschaft, beispielsweise im Luft- und Bahnverkehr sowie in Reisemobilen, Caravanen und auf Booten portable Toilettensysteme ihren Einsatz. Leider genügen diese Systeme jedoch nicht immer den Bedürfnissen von deren Benutzern.

Beispielsweise bieten mobile Toiletten heutigen Standards Fäkalienauffanggefäße mit hochgiftigen Desinfektionsmitteln oder es wird vollständig auf Auffanggefäße verzichtet und lediglich ein Abtransport nach außen durchgeführt, wie beispielsweise in älteren Zügen oder an Bord von Schiffen. Wie nachteilig letzteres insbesondere im Hinblick auf eine intakte Umwelt sein kann, bedarf keiner detaillierteren Erläuterung. Und, obwohl heutige Desinfektionsmittel für portable Toiletten biologisch abbaubar sein sollen, sind diese immer noch hochgiftig und stellen in der Regel eine starke Belastung für die Umwelt, insbesondere bei der Entsorgung in biologischen Kläranlagen, dar.

Ein ebenfalls gravierender Nachteil besteht im hohen Gewicht herkömmlicher Spülsysteme für Toiletten, bei welchen das nötige Spülwasser häufig ein vielfach höheres Gewicht als die zu entsorgenden Exkremente selbst hat. Dies macht sich insbesondere im Flugverkehr und dort am ausgeprägtesten auf Langstrecken bemerkbar.

Der Erfindung liegt folglich die Aufgabe zugrunde, ein Toilettensystem zur Verfügung zu stellen, bei welchem der Einsatz hochgiftiger Chemikalien nicht zwingend notwending ist und das gesamte Gewicht eines funktionsfähigen Toilettensystems nicht unnötig hoch liegt.

Diese Aufgabe wird auf überraschend einfache Weise bereits mit den Merkmalen der Ansprüche 1 und 12 gelöst.

Wird als Auffangvorrichtung für die Fäkalien ein verschließbarer Folienschlauch verwendet, so kann eine Entsorgung im wesentlichen ohne zusätzliches Gewicht erfolgen, da der Folienschlauch in der Regel einen vernachlässigbaren Gewichtsanteil aufweist und zusätzliches Spülwasser nicht unbedingt nötig ist. Ferner lassen sich derartige Schläuche auf engem Raum, beispielsweise gerollt oder gefaltet bevorraten, so dass gegenüber herkömmlichen Systemen auch zusätzlicher Platz geschaffen wird, denn voluminöse Spülwassertanks müssen nicht mehr mitgeführt bzw. verwendet werden. Hierbei wird doppelter Platz geschaffen, denn es muss weder ein großer Spülwasservorrat noch ein Auffangbehälter mit zusätzlichem Volumen für das benutzte Spülwasser mitgeführt werden. Auch die umfangreichen Rohrsysteme wie sie im Flugzeug üblich sind können entfallen, oder zumindest doch stark reduziert werden.

Wird der portionenweise verschließbare Folienschlauch zunächst über die Toilettenbrille und dann in die Schüssel der Toilette geführt, kommt es bei Benutzung der Toilette nicht mehr zu einem Kontakt mit von einem Vorbenuzter verschmutzten Bereichen, denn der Folienschlauch wird bei dessen Abtransport vorteilhaft so weit erneuert bzw. nachgeführt, dass sich hierdurch eine noch unberührter Bedeckung der Toilettenbrille durch neue Folienschlauchabschnitte ergibt. Eine Übertragung von Keimen oder mentale Blockaden, wie diese bei der Benutzung verschmutzter Toiletten herkömmlich auftraten, existieren bei den erfindungsgemäßen Ausführungsformen im wesentlichen nicht mehr.

Umfaßt das Toilettensystem eine Verschlußvorrichtung zum Verschließen des Folienschlauchs, werden unnötige Geruchsbelästigungen vermieden und wird der Abtransport des gefüllten Folienschlauchs auf hygienische Weise ermöglicht.

In besonders vorteilhafter Ausgestaltung ist die Verschlußvorrichtung eine Schweißvorrichtung zum Verschweißen befüllter Abschnitte des Folienschlauchs und umfaßt ferner eine Transportvorrichtung zum Transport der befüllten und verschweißten Folienschlauchabschnitte. Hierdurch kann bei geeigneter Wahl des Folienschlauchs auf zusätzliche Klebstoffe verzichtet werden. Derartige Klebstoffabschnitte, die vorteilhaft durch Strahlung, chemische und/oder thermische Einwirkung aktivierbar sind, können beispielsweise bei portablen Toilettensystemen ihren Einsatz finden, wo dem sicheren Verschluß, insbesondere auf langen Reisen in heißen Gebieten eine stark erhöhte Bedeutung zukommt.

Ferner kann eine Entlüftungsvorrichtung des Toilettensystems vorteilhaft dafür sorgen, dass sowohl Gerüche während als auch nach der Benutzung abgezogen werden und mit diesem kann darüber hinaus eine Evakuierung des Folienschlauchs vor dessen Verschließen durchgeführt werden.

In weiterer besonders vorteilhafter Ausgestaltung umfaßt die Erfindung eine Trennvorrichtung zum Abtrennen von befüllten Portionen des Folienschlauchs, wodurch es möglich wird, derartige Portionen getrennt zu entsorgen oder in einen Auffangbehälter dann dem Toilettensystem zu entnehmen, wenn dieser gefüllt ist, ohne daß dabei der restliche, Unbefüllte Folienschlauch mitentnommen werden muß.

Die entsprechende Gestaltung des Auffangbehälters ermöglicht einen Einsatz bei, oder einen Ersatz, nahezu aller bekannter Kassetten-Toilettensysteme, wobei jedoch weder Wasser zwingend verbraucht werden muss noch giftige Substanzen angewandt werden müssen. Soweit dies als vorteilhaft erachtet wird, kann der Folienschlauch dennoch auf dessen Innenseite mit keimabtötenden, insbesondere bakteriziden oder fungiziden Beschichtungen versehen sein, falls dies beispielsweise in Krankenhäusern oder tropischen Gebieten erwünscht ist, wo infektiöses Material zuverlässig unschädlich gemacht werden soll.

Gerade im nuklearmedizinischen Bereich erweist es sich ferner als großer Vorteil, dass beispielsweise radioaktive Substanzen nicht mit anderen Substanzen, wie beispielsweise dem Spülwasser in Kontakt gebracht werden müssen und deren vollständig getrennte Entsorgung ermöglicht wird.

Als sehr vorteilhaft hat sich ferner ein Warnaufdruck in der Nähe des Endes des Folienschlauchs, welcher dessen Ende ankündigt, sowie eine Aufnahmevorrichtung am Endes des Folienschlauchs erwiesen, welche insbesondere einen Haken umfaßt, mit dem ein neu eingelegter Folienschlauch durch die Transportvorrichtung automatisch ergriffen werden kann.

Die Erfindung wird nachfolgend anhand bevorzugter Ausführungsformen und unter Bezugnahme auf die beigefügten Zeichnungen detaillierter beschrieben.

Es zeigen:
- Fig. 1: eine Querschnittsdarstellung einer ersten erfindungsgemäßen Ausführungsform des Toilettensystems mit einer Verschlußvorrichtung für den Folienschlauch,
- Fig. 2: eine Detail aus Fig. 1 im Bereich der Toilettenbrille in vergrößerter Darstellung,
- Fig. 3: eine Querschnittsdarstellung einer weiteren erfindungsgemäßen Ausführungsform des Toilettensystems mit einer Entlüftungsvorrichtung,
- Fig. 4: die Anbringung eines Nachrüstsatzes bestehend aus Folienschlauch und Toilettenbrille an einem herkömmlichen Kassettentoilettensystem,
- Fig. 5: eine Querschnittsdarstellung einer nochmals weiteren erfindungsgemäßen Ausführungsform in Form eines Kassetten-Toilettensystems mit einem getrennt entnehmbaren Auffangbehälter für Fäkalien,
- Fig. 6: einen erfindungsgemäßen Nachrüstsatz in lagerfähigem Zustand,
- Fig. 7a und 7b: den Vorgang des Entlüftens und Portionierens von befüllten Foleinschlauchabschnitten.

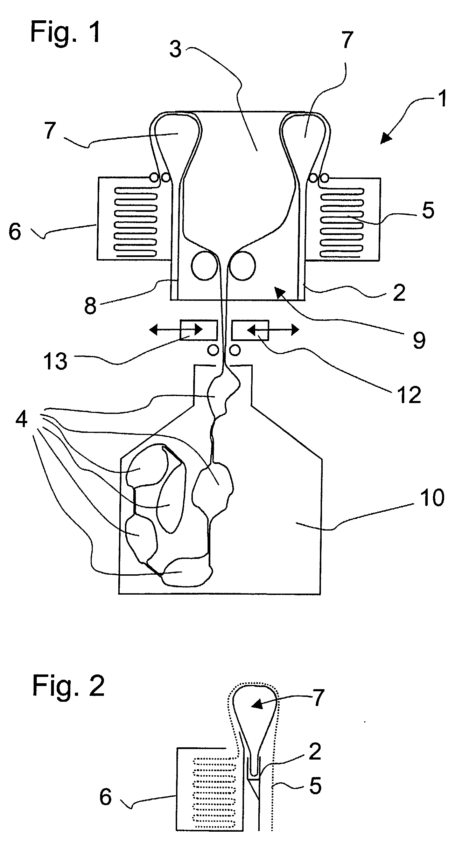

Bei der nachfolgenden detaillierten Beschreibung der Erfindung wird zunächst auf die in Fig. 1 dargestellte Ausführungsform Bezug genommen. Das im Ganzen mit dem Bezugszeichen 1 versehene, erfindungsgemäße Toilettensystem umfasst eine Toilette 2 mit einer Auffangvorrichtung 3 für Fäkalien 4, wobei die Auffangvorrichtung 3 bei einer ersten bevorzugten Ausführungsform einen portionenweise verschließbaren Folienschlauch 5 umfaßt.

Dieser Folienschlauch 5 lässt sich zusammen mit den darin eingefüllten Fäkalien 4 getrennt von der Toilette 2 entnehmen und entsorgen, wodurch chemische Zusatzstoffe nicht mehr zwingend nötig sind, da bei geigneter Wahl des Folienschlauchs 5 bereits eine direkte Entsorgung in einer Klär- oder Müllverbrennungsanlage durchgeführt werden kann, wodurch während des Transports kein weiterer direkter Kontakt der Fäkalien 4 mit der Umgebung stattfinden muß.

Wie beispielsweise den Fig. 1 und 2 zu entnehmen ist, wird der portionenweise verschließbare Folienschlauch 5 aus einem Vorratsbehälter 6 über eine Toilettenbrille 7 und von dort in eine Toilettenschüssel 8 geführt.

Alternativ kann der Folienschlauch 5 auch unter der Toilettenbrille 7, beispielsweise mit Hilfe von Rollen hindurch geführt sein.

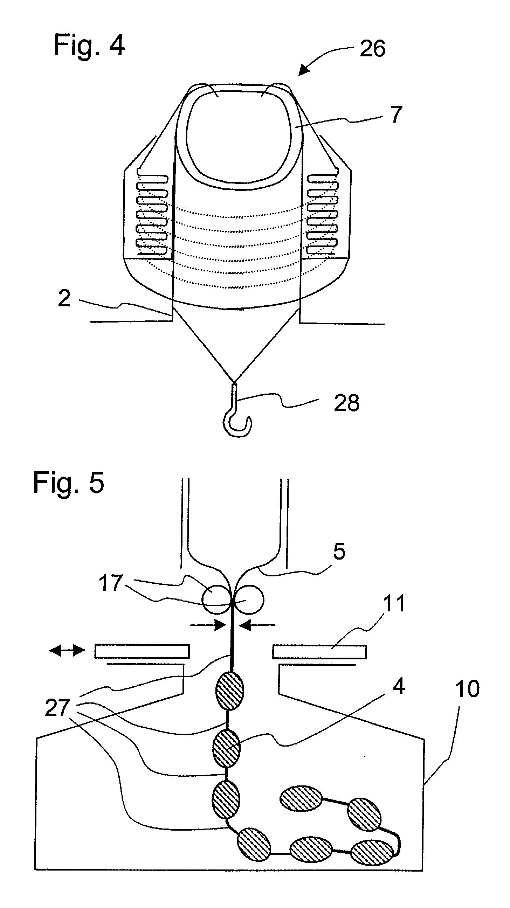

Durch eine untere oder seitliche Öffnung 9 tritt der befüllte Folienschlauch in einen Auffangbehäter 10, welcher ähnlich wie bei bekannten Kassettentoilettensysteme einen Verschluß 11 aufweist und der Toilette 2 entnehmbar ist, siehe beispielsweise auch Fig. 5.

Oberhalb des Auffangbehälters 10 ist eine Verschlußvorrichtung 12 zum Verschließen des Folienschlauchs 5 angeordnet, welche nach Betätigung eines in den Figuren nicht dargestellten Auslösers durch den jeweiligen Benutzer den durch die Öffnung 9 gezogenen Folienschlauch 5 portionsweise verschließt.

Ein derartiges Verschließen umfaßt bei Verwendung eines durch Adhäsion haftenden Folienschlauchs 5 das einfache Verdrehen des Folienschlauchs, wodurch eine Taille gebildet wird, welche bereits einen fluiddichten Verschluß im Folienschlauch 5 erzeugt.

Um vereinzelte Portionen zu erhalten kann der Folienschlauch 5 eine portionsweise beabstandete Perforierung enthalten, welche durch erhöhten Zug zu einer Vereinzelung der jeweiligen Portionen führt.

In alternativer Ausgestaltung zum Adhäsions-Folienschlauch enthält das Toilettensystem 1 eine Verschlußvorrichtung 12, bei welcher in einer Schweißvorrichtung zusammen- und auseinanderfahrbare Schweißbacken 13 zum Verschweißen befüllter Abschnitte 14 des Folienschlauchs 5 eingesetzt werden.

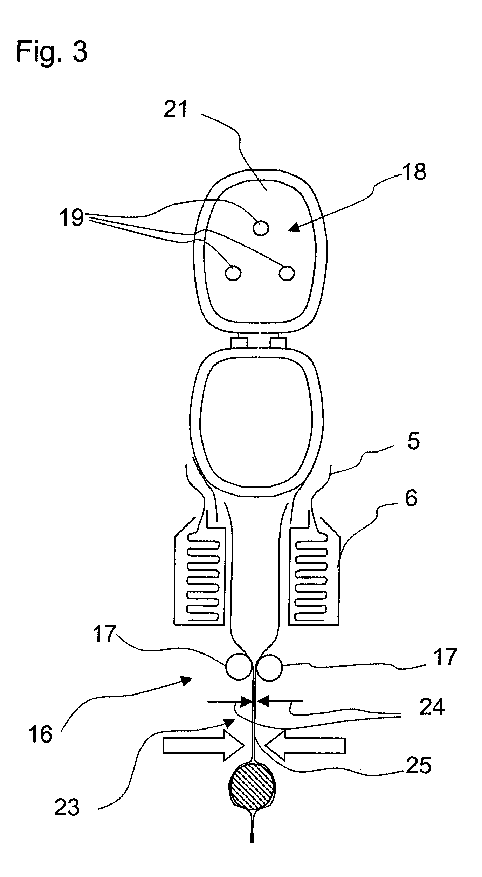

Ferner umfaßt das Toilettensystem 1, wie in Fig. 3 dargestellt eine Transportvorrichtung 16, beispielsweise in Form von motorisch angetriebenen, elastischen Schaumstoff- oder Weichgummi-Transportrollen 17, zum Transport der befüllten und verschweißten Folienschlauchabschnitte 5.

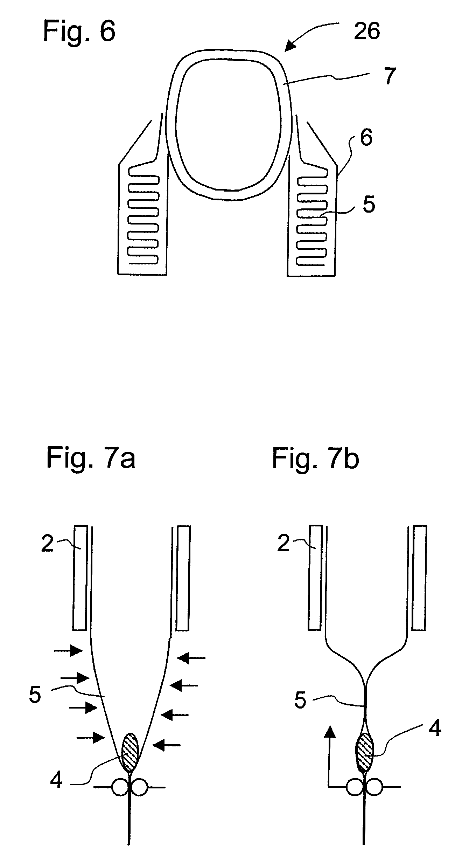

Mit einer an ein Entlüftungssystem angeschlossenem Entlüftungsvorrichtung 18, welche bevorzugt eine eigenständige Vakuumabsaugeinrichtung in Form einer elektrischen, in den Figuren nicht dargestellten jedoch dem Fachmann bekannten Pumpe aufweist und aus Öffnungen 19 beispielsweise eines auf die Toilettenbrille 7 schwenkbaren Toilettendeckels 21 die Luft absaugt, wird das Volumen des zu schließenden, befüllten Folienschlauchabschnitts 5 durch Absaugung der Luft verkleinert, wie dies beispielsweise in den Fig. 7a und 7b als Folge des Absaugvorgangs dargestellt ist.

Hierdurch wird auch das für die Zwischenlagerung im Auffangbehälter 10 nötige Volumen bestmöglich genutzt, wodurch bei gleichem Volumen des Auffangbehälters 10 in der Regel eine vielfach höhere Füllrate als bei herkömmlichen, mit Wasserspülung betriebenen Systemen realisiert wird.

Obwohl erfindungsgemäß nicht nötig, kann dennoch ein Spülvorgang mit Wasser durchgeführt werden, um beispielsweise eine erhöhte Akzeptanz bei den Benutzern zu bewirken. Jedoch werden auch bei derartigen Ausführungsformen weit geringere Spülwassermengen benötigt, da eine Innenreinigung der Toilettenschüssel nicht nötig ist.

Ferner kann eine Verdrängung der Luft aus dem befüllten Folienschlauch auch mit den elastische Walzen 17 erfolgen, welche dann zum Zusammendrücken des Folienschlauchs 5 oberhalb eines üblichen Füllstands verwendet werden.

Eine weitere Ausführungsform verwendet an Stelle oder zusätzlich zu den Schweißbacken 13 eine Heizeinrichtung zum Schrumpfen des Folienschlauchs 5, um zu einer entsprechenden Volumenreduktion zu gelangen.

Die in Fig. 3 dargestellte Ausführungsform umfaßt ferner eine Trennvorrichtung 23 zum Abtrennen von Portionen des Folienschlauchs 5, bei welcher Schneiden 24 zusammengefahren werden und den Folienschlauch 5 oberhalb eines verschlossenen Abschnitts 25 durchtrennen.

Fig. 4 und 6 zeigen einen Nachrüstsatz 26, insbesondere zur Herstellung eines Toilettensystems 1 mit einer aus Pappe oder Plastik bestehenden Toilettenbrille 7 mit Vorratsbehälter 6 für den Folienschlauch 5. Dieser Nachrüstsatz 26 kann beispielsweise von oben auf Toilettenbrillen herkömmlicher Kassettentoilettensysteme aufgelegt werden, wobei dann im erfindungsgemäß umgerüsteten nachrüstbaren Auffanbehälter 10 die Vorrichtungen zu Verschließen 12, Transportieren 16 und Portionieren 24 des Folienschlauchs 5 angeordnet sind.

Bei der in Fig. 6 dargestellten Ausführungsform des Nachrüstsatzes sind alle Komponenten, auch der Behälter 6 aus einem elastischen Material, beispielsweise Kunststoff, sodaß dieser Nachrüstsatz 26 vollständig flach gepresst werden kann und auch in lagerfähigen Zustand nur miminales Volumen einnimt.

Bei der nachrüstbaren sowie den normalen Ausführungsformen des Toilettensystems 1 kann der Folienschlauch 5 portionenweise Klebstoffabschnitte 27 umfassen, welche durch Strahlung, chemisch und/oder thermisch aktivierbar sind, siehe beispielswese Fig. 5.

Fig. 4 zeigt ferner eine Aufnahmevorrichtung mit einem Haken 28 für die automatische Ergreifung des Folienschlauchs 5 durch Transportvorrichtung 16 bei einem Einlegen von neuem Folienschlauch 5.

Bei bestimmten Ausführungsformen weist der Folienschlauch 5 eine keimabtötende, insbesondere bakterizide und/oder fungizide Innenbeschichtung, welche ausführungsabhängig auch von den Benutzern wählbare Duftstoffe umfassen kann.

Der Toilettendeckel kann, in einer bestimmten Zeit nach Benutzung der Toilette, automatisch geschlossen werden. Dadurch wird vermieden, daß heiße oder scharfkantige Gegenstände in die Toilette geworfen werden, die die Folie verletzen könnten.

## Patentansprüche

1. Toilettensystem umfassend eine Toilette mit einer Auffangvorrichtung für Fäkalien, in welcher die Fäkalien getrennt von der Toilette entnehmbar sind.

2. Toilettensystem nach Anspruch 1,
**dadurch gekennzeichnet,**
**daß** die Auffangvorrichtung einen portionenweise verschließbaren Folienschlauch umfaßt.

3. Toilettensystem nach Anspruch 1 oder 2,
**dadurch gekennzeichnet,**
**daß** der portionenweise verschließbare Folienschlauch über eine Toilettenbrille geführt ist.

4. Toilettensystem nach Anspruch 1, 2 oder 3,
**gekennzeichnet durch**
eine Verschlußvorrichtung zum Verschließen des Folienschlauchs.

5. Toilettensystem nach Anspruch 4,
**dadurch gekennzeichnet,**
**daß** die Verschlußvorrichtung Schweißvorrichtung zum Verschweißen befüllter Abschnitte des Folienschlauchs sowie eine Transportvorrichtung zum Transport der befüllten und verschweißten Folienschlauchabschnitte umfaßt.

6. Toilettensystem nach einem der vorstehenden Ansprüche,
ferner **gekennzeichnet durch**
eine Entlüftungsvorrichtung zum Entlüften der befüllten Auffangvorrichtung.

7. Toilettensystem nach Anspruch 6,
**dadurch gekennzeichnet,**
**daß** die Entlüftungsvorrichtung eine Vakuumabsaugeinrichtung und/oder elastische Walzen zum Zusammendrücken des Folienschlauchs umfaßt.

8. Toilettensystem nach einem der Ansprüche von 2 bis 7,
ferner **gekennzeichnet durch**
Heizeinrichtung zum Schrumpfen des Folienschlauchs.

9. Toilettensystem nach einem der Ansprüche von 2 bis 8,
ferner **gekennzeichnet durch**
einen Vorratsbehälter für den Folienschlauch, welcher an der Toilettenbrille oder einem Grundkörper der Toilette anbringbar ist und ungebrauchten Folienschlauch enthält.

10. Toilettensystem nach einem der vorstehenden Ansprüche,
ferner **gekennzeichnet durch**
einen verschließbaren und von der Toilette entnehmbaren Auffangbehälter für den befüllten Folienschlauch.

11. Toilettensystem nach einem der vorstehenden Ansprüche
ferner **gekennzeichnet durch**
eine Trennvorrichtung zum Abtrennen von Portionen des Folienschlauchs.

12. Toilettensystem nach einem der vorstehenden Ansprüche
ferner **gekennzeichnet durch**
einen selbstschließenden Deckel mit Zeitschalteinrichtung.

13. Nachrüstsatz, insbesondere zur Herstellung eines Toilettensystems nach einem der vorstehenden Ansprüche umfassend eine Toilettenbrille mit Vorratsbehälter für den Folienschlauch.

14. Nachrüstsatz nach Anspruch 13,
**gekennzeichnet durch**
eine Verschlußvorrichtung zum Verschließen des Folienschlauchs.

15. Nachrüstsatz nach Anspruch 13 oder 14,
ferner **gekennzeichnet durch**
einen verschließbaren Auffangbehälter für den befüllten Folienschlauch.

16. Auffangvorrichtung für ein mobiles Toilettensystem nach einem der vorstehenden Ansprüche umfassend einen thermisch verschweißbaren Endlosschlauch.

17. Auffangvorrichtung nach Anspruch 16,
**dadurch gekennzeichnet,**
**daß** der Folienschlauch verrotendendes Material, insbesondere Polyethylen umfasst.

18. Auffangvorrichtung nach Anspruch 16 oder 17,
**dadurch gekennzeichnet,**
**daß** der Folienschlauch portionenweise Klebstoffabschnitte umfaßt, welche durch Strahlung, chemisch und/oder thermisch aktivierbar sind.

19. Auffangvorrichtung nach einem der Ansprüche von 16 bis 18,
**gekennzeichnet durch**
eine Aufnahmevorrichtung, insbesondere **durch** einen Haken, für die automatische Ergreifung des Folienschlauchs **durch** Transportvorrichtung.

20. Auffangvorrichtung nach einem der vorstehenden Ansprüche von 16 bis 19
ferner **gekennzeichnet durch**
eine keimabtötende, insbesondere bakterizide und/oder fungizide Innenbeschichtung, welche vorzugsweise Duftstoffe umfasst.

21. Auffangvorrichtung nach einem der Ansprüche von 16 bis 20,
ferner **gekennzeichnet durch**
einen Warnaufdruck für das Ende des Folienschlauchs.
